Europäisches Patentamt

European Patent Office

Office européen des brevets

(11) **EP 1 544 244 A1**

(19)

(12) **DEMANDE DE BREVET EUROPEEN**

(43) Date de publication:
   **22.06.2005  Bulletin 2005/25**

(51) Int Cl.[7]: **C08L 23/04**, C08L 23/06

(21) Numéro de dépôt: **05075023.1**

(22) Date de dépôt: **13.12.1993**

(84) Etats contractants désignés:
   **AT BE CH DE ES FR GB GR IE IT LI NL PT SE**

(30) Priorité: **21.12.1992  BE 9201117**

(62) Numéro(s) de document de la (des) demande(s)
   initiale(s) en application de l'article 76 CBE:
   **99107093.9 / 0 940 411**
   **93203496.0 / 0 603 935**

(71) Demandeur: **SOLVAY POLYOLEFINS EUROPE -**
   **BELGIUM (Société Anonyme)**
   **1050 Bruxelles (BE)**

(72) Inventeur: **Promel, Michel**
   **Deer Park, Texas 77536 (US)**

(74) Mandataire: **Smith, Julian Philip Howard et al**
   **O & D Trading Limited**
   **Patents and Agreements**
   **Compass Point**
   **79-87 Kingston Road**
   **Staines, Middlesex TW18 1DT (GB)**

Remarques:
   Cette demande a été déposée le 07 - 01 - 2005
   comme demande divisionnaire de la demande
   mentionnée sous le code INID 62.

(54) **Composition de polymères d'éthylène**

(57)   Tube comprenant une composition de polymères d'éthylène, comprenant d'une part un premier polymère de l'éthylène, présentant un indice de fluidité $MI_2$, mesuré à 190°C sous une charge de 2,16 kg selon la norme ASTM D1238, de 5 à 1 000 g/10 min et comprenant éventuellement une alpha-oléfine ou une dioléfine comprenant de 4 à 18 atomes de carbone en une quantité au maximum égale à 5 % en poids, et, d'autre part, un second polymère de l'éthylène présentant un indice de fluidité $MI_5$, mesuré à 190°C sous une charge de 5 kg selon la norme ASTM D1238, de 0,01 à 2 g/10 min, et comprenant de 0,5 à 20 % en poids d'une alpha-oléfine ou d'une dioléfine comprenant de 4 à 8 atomes de carbone, le rapport des indices de fluidité étant de 500 à 50 000, le rapport pondéral des polymères étant égal à (30 à 70):(70 à 30), et la composition présentant les caractéristiques suivantes:

- une distribution des poids moléculaires définie par un rapport $M_w/M_n$ de 5 à 70,
- un indice de fluidité $MI_5$ de 0,1 à 10 g/10 min et une viscosité dynamique $\eta$ exprimée en dPa.s et mesurée à un gradient de vitesse de 100 s$^{-1}$ à 190 °C répondant à la relation

$$0,652 \geq \frac{[\log(177470/MI_5) - \log\eta]}{2 - \log(2,53 \times MI_5)}$$

## Description

La présente invention a pour objet un procédé de préparation d'une composition de polymères d'éthylène, mettant en oeuvre plusieurs réacteurs disposés en série. Elle concerne en particulier un procédé de préparation d'une composition de polymères d'éthylène comprenant en outre une alpha-oléfine.

La demande de brevet EP-A-0528523 non encore publiée à la date de priorité de la présente invention, mais faisant partie de l'art antérieur conformément à l'article 54(3) CBE divulgue un procédé de polymérisation dans deux réacteurs phase gazeuse en série au moyen d'un catalyseur supporté sur de la silice.

Dans le brevet EP-22376-B1 (MITSUI PETROCHEMICAL INDUSTRIES), on décrit un procédé de préparation d'une composition de polymères d'éthylène, selon lequel on met en oeuvre au moins deux réacteurs en série, on polymérise une première partie de l'éthylène en présence d'un catalyseur dans un premier réacteur de la série, on soutire de celui-ci un polymère et le catalyseur, on fait circuler ceux-ci successivement dans les autres réacteurs dans chacun desquels on fait arriver une autre partie de l'éthylène, que l'on polymérise, et on récupère du dernier réacteur une composition de polymères d'éthylène. Ce procédé connu utilise dans chaque réacteur des conditions de polymérisation différentes de celles mises en oeuvre dans les autres réacteurs, de manière à ce que, dans chaque réacteur, on produise un polymère présentant une viscosité différente - et dès lors un indice de fluidité différent - de ceux produits dans les autres réacteurs. En particulier, la composition de polymères d'éthylène obtenue par ce procédé connu comprend un premier polymère présentant une viscosité intrinsèque de 0,3 à 3 et un deuxième polymère présentant une viscosité intrinsèque de 1 à 12, le rapport entre ces viscosités étant au moins égal à 1,5.

Ce procédé connu ne permet pas d'atteindre un écart élevé des viscosités ou des indices de fluidité des polymères produits dans les différents réacteurs, de sorte qu'il ne permet pas d'obtenir des polymères combinant de bonnes propriétés de mise en oeuvre (propres aux polymères d'indice de fluidité élevé) et de bonnes propriétés mécaniques (propres aux polymères d'indice de fluidité faible).

Par ailleurs, ce procédé connu est mal adapté à un réglage de la distribution des poids moléculaires de la composition finale. Dès lors, il ne permet pas d'accéder à une composition finale apte à la mise en oeuvre d'objets par injection (composition présentant une distribution des poids moléculaires caractérisée par un rapport $M_w/M_n$ inférieur à 10), ni à des compositions utilisables pour la fabrication de films par calandrage (compositions dans lesquelles le rapport $M_w/M_n$ précité est supérieur à 40).

Ce procédé connu présente en outre l'inconvénient de provoquer, lorsque le polymère de viscosité faible ou d'indice de fluidité élevé est fabriqué dans un des réacteurs dans un diluant hydrocarboné en présence d'hydrogène, une saturation rapide du diluant en hydrogène.

La présente invention remédie aux inconvénients énoncés ci-dessus en fournissant un procédé nouveau mettant en oeuvre plusieurs réacteurs, qui permet l'obtention d'un écart prononcé des indices de fluidité des polymères obtenus dans les différents réacteurs, qui présente une grande souplesse dans le réglage de la distribution des poids moléculaires de la composition finale de polymères, et qui permet en outre de produire un polymère d'indice de fluidité très élevé en présence d'un diluant hydrocarboné et d'hydrogène, sans risque de saturation prématurée du diluant par l'hydrogène.

En conséquence, l'invention concerne un procédé de préparation d'une composition de polymères d'éthylène comprenant un polymère d'indice de fluidité élevé et un polymère d'indice de fluidité faible dans au moins deux réacteurs, selon lequel on introduit dans un premier réacteur une partie de l'éthylène, un catalyseur dérivé d'un métal de transition choisi parmi les éléments des groupes IIIB, IVB, VB et VIB du tableau périodique, et exempt de silice et un cocatalyseur, on y effectue une polymérisation de l'éthylène, on soutire de ce réacteur un milieu comprenant un de ces polymères, le catalyseur et le cocatalyseur, on introduit dans un réacteur ultérieur le milieu et une autre partie de l'éthylène que l'on polymérise pour former l'autre polymère, le rapport pondéral des polymères étant égal à (30 à 70):(70 à 30); selon l'invention, le catalyseur présente une distribution intrinsèque des poids moléculaires définie par un rapport $M_w/M_n$ intrinsèque inférieur ou égal à 10 et une constante de désactivation inférieure ou égale à 0,5 h$^{-1}$, et le polymère d'indice de fluidité élevé a un indice de fluidité $MI_2$, mesuré sous une charge de 2,16 kg à 190 °C selon la norme ASTM D 1238, de 5 à 1 000 g/10 min, et le polymère d'indice de fluidité faible a un indice de fluidité $MI_5$, mesuré sous une charge de 5 kg à 190 °C selon la norme ASTM D 1238, de 0,01 à 2 g/10 min, le rapport entre ces indices de fluidité étant de 500 à 50 000.

Par distribution intrinsèque des poids moléculaires d'un catalyseur, on entend désigner la distribution des poids moléculaires d'un polymère obtenu en une seule étape de polymérisation et dans des conditions de polymérisation constantes, en présence de ce catalyseur. Le rapport $M_w/M_n$ intrinsèque caractérisant cette distribution intrinsèque des poids moléculaires désigne le rapport entre la masse moléculaire moyenne en poids $(M_w)$ du polymère ainsi obtenu et la masse moléculaire moyenne en nombre $(M_n)$ de ce polymère, ce rapport étant mesuré par chromatographie d'exclusion stérique réalisée dans le 1,2,4-trichlorobenzène à 135 °C sur un chromatographe de la société WATERS type 150 C.

Par constante de désactivation d'un catalyseur, on entend désigner le coefficient angulaire caractérisant la relation linéaire entre le logarithme du rapport de la vitesse de polymérisation et de la vitesse initiale de polymérisation, et le temps de polymérisation, la polymérisation étant effectuée en présence de ce catalyseur. Le coefficient angulaire est calculé au moyen d'une régression linéaire.

L'indice de fluidité $MI_2$ (respectivement $MI_5$) d'un polymère désigne le débit du polymère fondu à 190 °C, qui s'écoule au travers d'une filière d'un diamètre de 2 mm et d'une longueur de 8 mm, sous l'action d'un piston lesté d'une masse de 2,16 kg (respectivement 5 kg), ce débit étant exprimé en g/10 min suivant la norme ASTM D 1238.

Dans le procédé selon l'invention, l'éthylène est polymérisé en présence d'un catalyseur. Une caractéristique essentielle du procédé réside dans les propriétés du catalyseur mis en oeuvre. Selon l'invention, le catalyseur présente une distribution intrinsèque des poids moléculaires définie par un rapport $M_w/M_n$ intrinsèque au maximum égal à 10, de préférence inférieur à 8, les valeurs inférieures ou égales à 7 étant les plus avantageuses, par exemple environ 6,5 ou 5. Le rapport $M_w/M_n$ intrinsèque est habituellement supérieur à 3, les valeurs supérieures à 4 étant les plus courantes. Le catalyseur utilisé dans le procédé selon l'invention présente en outre une constante de désactivation inférieure ou égale à 0,5 h-$^1$, de préférence au maximum égale à 0,3 h-$^1$, les valeurs inférieures ou égales à 0,2 h-$^1$, par exemple environ 0,15 h-$^1$ étant recommandées. La constante de désactivation est généralement supérieure à 0,05 h-$^1$, les valeurs supérieures ou égales à 0,1 h-$^1$ étant les plus courantes.

Le catalyseur utilisé dans le procédé selon l'invention peut être choisi parmi les catalyseurs du type Ziegler, en particulier ceux dérivés du titane, et parmi les catalyseurs du type métallocène, qui est un dérivé cyclopentadiénylique d'un métal de transition, en particulier du zirconium.

Comme catalyseurs du type Ziegler, on peut citer à titre d'exemples non limitatifs, les composés comprenant un métal de transition choisi parmi les groupes IIIB, IVB, VB ou VIB du tableau périodique, du magnésium et un halogène, obtenus en mélangeant un composé de magnésium avec un composé du métal de transition et un composé halogéné. L'halogène peut éventuellement faire partie intégrante du composé de magnésium ou du composé du métal de transition.

Comme exemples de catalyseurs du type métallocène, on peut citer les métallocènes activés par un aluminoxane, et les métallocènes ioniques activés par un agent ionisant tels que décrits par exemple dans la demande de brevet EP-500944-A1 (MITSUI TOATSU CHEMICALS).

On préfère les catalyseurs du type Ziegler. Parmi ceux-ci, ceux comprenant au moins un métal de transition choisi parmi les groupes IIIB, IVB, VB et VIB, du magnésium et au moins un halogène conviennent très bien. De bons résultats sont obtenus avec ceux comprenant :

- de 10 à 30 % en poids de métal de transition, de préférence de 15 à 20 % en poids, typiquement environ 17 % en poids,
- de 20 à 60 % en poids d'halogène, les valeurs de 30 à 50 % en poids (par exemple environ 40 % en poids) étant préférées,
- de 0,5 à 20 % en poids de magnésium, habituellement de 1 à 10 % en poids, par exemple environ 5 % en poids,
- de 0,1 à 10 % en poids d'aluminium, en général de 0,5 à 5 % en poids, les valeurs de 1 à 3 % en poids étant les plus courantes;
   le solde est généralement constitué d'éléments provenant des produits utilisés pour leur fabrication tels que du carbone, de l'hydrogène et de l'oxygène. Le métal de transition et l'halogène sont préférentiellement le titane et le chlore.

Dans le procédé selon l'invention, la polymérisation est effectuée en présence d'un cocatalyseur. On peut utiliser tout cocatalyseur connu de la technique, notamment des composés comprenant au moins une liaison chimique aluminium-carbone, tels que les composés organoaluminiques éventuellement halogénés pouvant comprendre de l'oxygène ou un élément du groupe 1 du tableau périodique; et les aluminoxanes. Comme exemples de composés organoaluminiques, on peut citer, les trialkylaluminiums tels que le triéthylaluminium, les trialkénylaluminiums tels que le triisopropénylaluminium, les mono- et dialcoolates d'aluminium tels que l'éthylate de diéthylaluminium, les alkylaluminiums mono- et dihalogénés tels que le chlorure de diéthylaluminium, les mono- et dihydrures d'alkylaluminium tels que l'hydrure de dibutylaluminium et les composés organoaluminiques comprenant du lithium tels que LiAl$(C_2H_5)_4$. Les composés organoaluminiques, notamment ceux qui ne sont pas halogénés, conviennent bien. Le triéthylaluminium et le triisobutylaluminium sont spécialement avantageux.

Dans le procédé selon l'invention on met en oeuvre une installation comprenant au moins deux réacteurs de polymérisation disposés en série et reliés entre eux. Chaque réacteur est alimenté en éthylène. Le catalyseur et le cocatalyseur sont, de préférence, uniquement introduits dans le premier réacteur, dans lequel on polymérise de l'éthylène jusqu'à l'obtention d'un polymère présentant les caractéristiques propres aux conditions de polymérisation de ce réacteur. On introduit dans le deuxième réacteur, de préférence d'une manière continue, un milieu provenant du premier réacteur et comprenant le polymère obtenu dans celui-ci, le catalyseur et le cocatalyseur. Dans ce deuxième réacteur on polymérise l'éthylène qui y est introduit, à l'aide du catalyseur et du cocatalyseur provenant du premier réacteur, et on utilise dans ce deuxième réacteur des conditions de polymérisation (température, concentration en agent de transfert, concentration en comonomère éventuel) différentes de celles mises en oeuvre dans le premier réacteur. Ainsi, le polymère produit dans le deuxième réacteur présente un indice de fluidité différent de celui produit dans le premier, et la composition globale de polymères recueillie du deuxième réacteur combine des caractéristiques propres aux conditions opératoires du premier réacteur et des caractéristiques propres aux conditions opératoires du deuxième réacteur.

Dans le procédé selon l'invention le polymère d'indice de fluidité élevé et le polymère d'indice de fluidité faible peuvent être préparés dans un ordre quelconque.

L'installation peut évidemment comprendre plus de deux réacteurs connectés en série. Dans ce cas, le premier réacteur de la série est alimenté avec le catalyseur et le cocatalyseur, et chaque réacteur est alimenté avec de l'éthylène et avec le milieu provenant du réacteur précédent de la série, ce milieu comprenant le catalyseur, le cocatalyseur et un mélange des polymères produits dans les réacteurs précédents de la série.

Dans le cas où l'installation comprend plus de deux réacteurs en série, le polymère d'indice de fluidité élevé et le polymère d'indice de fluidité faible tels que définis plus haut peuvent être produits dans deux réacteurs contigus ou non contigus de la série. Dans ce cas particulier de mise en oeuvre du procédé selon l'invention, on peut réaliser, dans les autres réacteurs de la série, des conditions opératoires pour lesquelles on produit indifféremment un polymère d'indice de fluidité $MI_2$ inférieur à 5, de 5 à 1 000 ou supérieur à 1 000 ou un indice de fluidité $MI_5$ inférieur à 0,01, de 0,01 à 2 ou supérieur à 2, les indices de fluidité $MI_2$ et $MI_5$ ayant été définis plus haut.

On se limite de préférence à deux réacteurs.

Dans une première forme d'exécution du procédé selon l'invention la formation du polymère d'indice de fluidité élevé précède celle du polymère d'indice de fluidité faible. Cette forme d'exécution s'avère particulièrement avantageuse lorsqu'on souhaite obtenir une composition de polymères d'éthylène utilisable pour la fabrication d'objets façonnés dont la surface est exempte d'imperfections tels que des points durs.

Dans une deuxième forme d'exécution du procédé selon l'invention on alimente au moins un des réacteurs en hydrogène jouant le rôle d'agent de transfert modulant l'indice de fluidité du polymère produit dans ce réacteur. La pression partielle de l'hydrogène dans le(s) réacteur(s) est avantageusement de 0,001 à 2 MPa, plus particulièrement de 0,002 à 1,5 MPa, de préférence de 0,005 à 1,3 MPa, le rapport entre les pressions partielles de l'hydrogène et de l'éthylène n'excédant généralement pas 5, de préférence pas 3, et étant par exemple compris entre 0,01 à 2,5.

Dans une variante de cette deuxième forme d'exécution l'hydrogène est introduit de manière continue dans tous les réacteurs, le rapport entre les pressions partielles de l'éthylène et de l'hydrogène dans le premier réacteur étant différent de celui mis en oeuvre dans les autres réacteurs. Dans cette variante il est important de maintenir ces rapports constants dans chaque réacteur pendant la durée de la polymérisation. Le quotient de ces deux rapports est avantageusement supérieur à 20, de préférence à 40; il est souhaitable qu'il n'excède pas 300, par exemple 200. Un quotient sélectionné de 45 à 175 convient particulièrement bien.

Cette forme d'exécution du procédé selon l'invention présente la particularité avantageuse de permettre l'obtention d'un polymère d'indice de fluidité très élevé en présence d'un diluant hydrocarboné tout en évitant une saturation rapide du diluant hydrocarboné par l'hydrogène.

Dans le procédé selon l'invention, le processus de polymérisation dans les réacteurs peut être sélectionné parmi les processus en solution, en suspension ou en phase gazeuse, indifféremment des propriétés du polymère qu'on souhaite y préparer et du choix du processus utilisé dans l'autre réacteur. On peut par exemple réaliser la polymérisation dans deux réacteurs en phase gazeuse, ou dans un premier réacteur en suspension et dans un deuxième réacteur en phase gazeuse ou inversément. On effectue la polymérisation de préférence en suspension dans deux réacteurs.

Dans le cas d'une polymérisation en suspension, celle-ci est en général effectuée dans un diluant hydrocarboné inerte vis-à-vis du catalyseur, du cocatalyseur et du polymère produit (tel que les hydrocarbures aliphatiques, cycloaliphatiques et aromatiques liquides), à une température telle qu'au moins 50 % (de préférence au moins 70 %) du polymère formé y soit insoluble. Des diluants préférés sont les alcanes linéaires tels que le n-butane, le n-hexane et le n-heptane, ou les alcanes ramifiés tels que l'isobutane, l'isopentane, l'isooctane et le 2,2-diméthylpropane, ou les cycloalcanes tels que le cyclopentane et le cyclohexane ou leurs mélanges. La température de polymérisation est choisie généralement de 20 à 200 °C, de préférence de 50 à 100 °C. La pression partielle d'éthylène est choisie le plus souvent de 0,1 à 5 MPa, de préférence de 0,2 à 2 MPa, plus particulièrement de 0,4 à 1,5 MPa.

Dans le procédé selon l'invention on peut éventuellement alimenter le deuxième réacteur et/ou, le cas échéant, au moins un des réacteurs suivants, en catalyseur et/ou en cocatalyseur frais. Toutefois, on préfère introduire le catalyseur et le cocatalyseur exclusivement dans le premier réacteur.

Dans une forme d'exécution particulière du procédé selon l'invention, on introduit en outre, dans au moins un des réacteurs, une alpha-oléfine de manière à fabriquer dans ce réacteur un copolymère d'éthylène et de cette alpha-oléfine. L'alpha-oléfine peut être sélectionnée parmi les monomères oléfiniquement insaturés comprenant de 3 à 8 atomes de carbone, par exemple le propylène, le 1 -butène, le 1-pentène, le 3-méthyl-1-butène, le 1-hexène, les 3- et 4-méthyl-1-pentènes et le 1-octène. D'autres exemples d'alpha-oléfine sont les dioléfines comprenant de 4 à 18 atomes de carbone, de préférence les dioléfines aliphatiques non conjuguées telles que le 4-vinylcyclohexène et le 1,5-hexadiène, les dioléfines alicycliques ayant un pont endocyclique telles que le dicyclopentadiène, le méthylène- et l'éthylidène-norbornène; et les dioléfines aliphatiques conjuguées telles que le 1,3-butadiène, l'isoprène et le 1,3-pentadiène. Des alpha-oléfines préférées sont le propylène, le 1-butène, le 1-hexène, le 1-octène et le 1,5-hexadiène. De bons résultats sont obtenus avec le 1-butène et le 1-hexène.

Dans cette forme d'exécution particulière du procédé selon l'invention, l'alpha-oléfine ou la dioléfine comprenant de 4 à 18 atomes de carbone est généralement introduite dans celui des réacteurs dans lequel on produit le polymère d'indice de fluidité faible, en une quantité réglée pour que ce polymère comprenne de 0,5 à 20 % en poids d'alpha-oléfine ou de dioléfine comprenant de 4 à 18 atomes de carbone, de préférence de 1 à 10 % en poids, par exemple 2 % en poids. En variante, une partie de l'alpha-oléfine ou de la dioléfine comprenant de 4 à 18 atomes de carbone peut aussi être introduite dans l'autre réacteur, en une quantité limitée pour que la teneur en alpha-oléfine ou en dioléfine comprenant de 4 à 18 atomes de carbone du polymère d'indice de fluidité élevé n'excède pas 5 % en poids, de préférence 3 % en poids, par exemple 1 % en poids; la teneur en alpha-oléfine ou en dioléfine comprenant de 4 à 18 atomes de carbone du polymère d'indice de fluidité élevé est habituellement au moins égale à 0,1 %.

Le procédé selon l'invention s'applique à la préparation de compositions de polymères d'éthylène pouvant comprendre un ou plusieurs homopolymères d'éthylène et/ou un ou plusieurs copolymères d'éthylène.

Le procédé suivant l'invention permet l'obtention de compositions de polymères d'éthylène et éventuellement d'alpha-oléfines ou de dioléfines comprenant de 4 à 18 atomes de carbone, dans lesquelles chaque polymère individuel présente un indice de fluidité suffisamment différent de celui de l'autre ou de chacun des autres polymères afin de bénéficier simultanément des propriétés favorables à la mise en oeuvre propres à un polymère d'indice de fluidité élevé et des bonnes propriétés mécaniques propres à un polymère d'indice de fluidité faible.

Le procédé selon l'invention présente par ailleurs une grande souplesse dans le réglage de la distribution des poids moléculaires de la composition finale. Ainsi, le procédé selon l'invention permet la fabrication d'une large gamme de compositions de polymères d'éthylène allant de celles aptes à la mise en oeuvre d'objets moulés par injection à celles utilisables pour la fabrication de films par extrusion ou calandrage.

En outre, le procédé selon l'invention permet l'obtention de compositions de polymères d'éthylène et éventuellement d'alpha-oléfines ou de dioléfines comprenant de 4 à 18 atomes de carbone comprenant une alpha-oléfine ou une dioléfine en une quantité variable pouvant atteindre 10 % en poids, de préférence de 0,5 à 6 % en poids, par exemple environ 1 % en poids.

Le procédé selon l'invention s'avère particulièrement performant pour la fabrication de compositions de polymères d'éthylène et éventuellement d'alpha-oléfines ou de dioléfines comprenant de 4 à 18 atomes de carbone utilisables pour la fabrication d'objets présentant une résistance élevée à la fissuration sous contrainte et dont la surface est exempte d'imperfections tels que des points durs.

L'invention concerne dès lors aussi des compositions de polymères d'éthylène susceptibles d'être obtenues par le procédé selon l'invention possédant les propriétés énoncées ci-dessus, ces compositions comprenant, d'une part, un premier polymère ayant un indice de fluidité $MI_2$ de 5 à 1 000 g/10 min, de préférence de 10 à 500 g/10 min, et, d'autre part, un second polymère ayant un indice de fluidité $MI_5$ de 0,01 à 2 g/10 min, de préférence de 0,03 à 1 g/10 min, en particulier de 0,05 à 0,7 g/10 min, le rapport de ces indices de fluidité étant de 500 à 50 000, de préférence de 1 000 à 10 000. Le rapport pondéral de ces deux polymères est généralement égal à (30 à 70):(70 à 30), de préférence à (40 à 60):(60 à 40), par exemple à (42 à 58):(58 à 42). Le premier polymère précité peut éventuellement comprendre une alpha-oléfine ou une dioléfine comprenant de 4 à 18 atomes de carbone en une quantité au maximum égale à 5 % en poids et le second polymère comprend de 0,5 à 20 % en poids d'une alpha-oléfine ou d'une dioléfine comprenant de 4 à 18 atomes de carbone. Des compositions avantageuses comprennent un homopolymère d'éthylène d'indice de fluidité élevé et un copolymère d'éthylène d'indice de fluidité faible contenant par exemple de 0,5 à 6 % en poids d'une alpha-oléfine ou d'une dioléfine comprenant de 4 à 18 atomes de carbone. Les compositions selon l'invention présentent une distribution des poids moléculaires définie par un rapport $M_w/M_n$ pouvant varier de 5 à 70, en particulier de 7 à 50, par exemple de 10 à 40. En outre, les compositions selon l'invention présentent un indice de fluidité $MI_5$ de 0,1 à 10 g/10 min, en particulier de 0,5 à 5 g/10 min et une viscosité dynamique $\eta$ exprimée en dPa.s et mesurée à un gradient de vitesse de 100 $s^{-1}$ à 190 °C, répondant à la relation

$$0,652 \geq \frac{[\log(177470/MI_5) - \log\eta]}{2 - \log(2,53 \times MI_5)}$$

Les compositions selon l'invention contiennent couramment de 0,5 à 10 % en poids d'une alpha-oléfine ou d'une dioléfine comprenant de 4 à 18 atomes de carbone, de préférence de 1 à 6 % en poids.

Les compositions selon l'invention trouvent une utilisation particulièrement intéressante dans une large gamme d'applications industrielles, du fait qu'elles combinent de bonnes propriétés de mise en oeuvre et de bonnes propriétés mécaniques telles que la résistance au choc et à la fissuration sous contrainte. Les compositions selon l'invention sont aptes à être mises en oeuvre par tous les procédés classiques de transformation des matières plastiques et plus particulièrement par les procédés d'extrusion, d'extrusion-soufflage, d'extrusion-thermoformage, de calandrage et d'injection. Ces compositions conviennent pour la fabrication d'objets façonnés tels que des films, des feuilles, des plaques, des récipients, des sacs et des sachets; elles conviennent particulièrement bien pour la fabrication de tubes.

La présente invention concerne dès lors aussi l'utilisation des compositions décrites ci-avant pour la fabrication de tubes.

Les exemples dont la description suit, servent à illustrer l'invention.

La signification des symboles utilisés dans ces exemples, les unités exprimant les grandeurs mentionnées et les méthodes de mesure de ces grandeurs sont explicitées ci-dessous.

$MI_2$ = indice de fluidité d'un polymère désignant le débit du polymère fondu à 190 °C, qui s'écoule au travers d'une filière d'un diamètre de 2 mm et d'une longueur de 8 mm, sous l'action d'un piston lesté d'une masse de 2,16 kg, ce débit étant exprimé en g/10 min, suivant la norme ASTM D 1238.

$MI_5$ = indice de fluidité d'un polymère (ou d'une composition de polymères) désignant le débit du polymère fondu (ou de la composition fondue) à 190 °C, qui s'écoule au travers d'une filière d'un diamètre de 2 mm et d'une longueur de 8 mm, sous l'action d'un piston lesté d'une masse de 5 kg, ce débit étant exprimé en g/10 min, suivant la nonne ASTM D 1238.

$M_w/M_n$ = rapport entre la masse moléculaire moyenne en poids ($M_w$) d'un polymère (ou d'une composition de polymères) et la masse moléculaire moyenne en nombre ($M_n$) de ce polymère (ou de cette composition), mesuré par chromatographie d'exclusion stérique réalisée dans le 1,2,4-trichlorobenzène à 135 °C sur un chromatographe de la société WATERS type 150 C.

$\eta$ = viscosité dynamique d'un polymère (ou d'une composition de polymères) exprimée en dPa.s et mesurée à un gradient de vitesse de 100 $s^{-1}$ à 190 °C.

$K_d$ = constante de désactivation d'un catalyseur exprimé en $h^{-1}$, qui est le coefficient angulaire caractérisant la relation linéaire entre le logarithme du rapport de la vitesse de polymérisation et de la vitesse initiale de polymérisation, et le temps de polymérisation, la polymérisation étant effectuée en présence de ce catalyseur. Le coefficient angulaire est calculé au moyen d'une régression linéaire.

$\alpha$ = activité catalytique en grammes de polymère insoluble obtenus par heure et par gramme de catalyseur et divisés par la fraction molaire d'éthylène dans le diluant.

## Exemple 1 (conforme à l'invention)

### A. Préparation du catalyseur

On a fait réagir pendant 4 heures à 150 °C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium pendant 90 minutes à 45 °C. Le solide ainsi obtenu, recueilli de la suspension, comprenait (% en poids) :

Ti : 17 ; Cl: 41 ; Al : 2 ; Mg : 5.

### B. Polymérisation de l'éthylène dans un seul réacteur

On a introduit dans un autoclave de 1,5 litre, muni d'un agitateur, 1 litre d'hexane et 1 mmole de triéthylaluminium. Puis on a élevé la température à 85 °C, que l'on a maintenue constante durant le temps de polymérisation. On y a ensuite introduit une dose unique d'hydrogène à une pression de 0,4 MPa et de l'éthylène. Puis on y a injecté 7 mg du catalyseur solide obtenu en A. La pression partielle d'éthylène a été maintenue constante à une valeur de 1 MPa pendant 1 heure. L'autoclave a ensuite été dégazé et refroidi. Le polyéthylène recueilli de l'autoclave présentait un rapport $M_w/M_n$ de 6,7 et le catalyseur présentait un $K_d$ de 0,15.

### C. Polymérisation de l'éthylène en deux réacteurs

Le procédé de polymérisation en deux réacteurs successifs a été simulé dans un seul réacteur en deux étapes séparées par une détente intermédiaire et réinitialisation des paramètres opératoires.

### Polymérisation d'un premier polymère (i) :

On a introduit dans un autoclave de 5 litres, muni d'un agitateur, 2 litres d'hexane et 2 mmoles de triéthylaluminium. Puis on a élevé la température à 85 °C, que l'on a maintenue constante durant le temps de polymérisation. On y a ensuite introduit une dose unique d'hydrogène à une pression de 1,3 MPa et de l'éthylène. La pression partielle d'éthylène a été maintenue constante à une valeur de 0,6 MPa. Puis on y a injecté 22 mg du catalyseur solide obtenu en A. Après 73 minutes l'autoclave a été dégazé. 200 g de polymère (i) ont été obtenus. Le catalyseur présentait une activité $\alpha$ de 10,3.

**Polymérisation d'un deuxième polymère (ii) :**

On a rajouté 200 ml d'hexane dans l'autoclave. La température a été amenée à 75 °C et on l'a maintenue constante durant le temps de polymérisation. On a ensuite introduit une dose d'hydrogène à une pression de 0,08 MPa, de l'éthylène et une dose de butène de manière à obtenir un rapport molaire butène/éthylène dans la phase liquide de 0,38. La pression partielle d'éthylène a été maintenue constante à une valeur de 0,4 MPa jusqu'à l'obtention d'une quantité supplémentaire de 169 g de polymère (ii). Après dégazage, on a recueilli de l'autoclave 369 g d'une composition de polymères (i) et (ii).
Le catalyseur présentait une activité $\alpha$ de 7,3.
On a obtenu les résultats suivants :

**Polymère (i) :**

$MI_2 = $ 168

**Polymère (ii) :**

$MI_5 = $ 0,21

**Composition comprenant les polymères (i) et (ii)** :

$MI_5 = $ 15,9
$\eta = $ 6700
$M_w/M_n = $ 21.

**Exemple 2 (de référence)**

Dans cet exemple, on a fabriqué un catalyseur présentant une distribution intrinsèque définie par un rapport $M_w/M_n$ supérieur à 10, que l'on a ensuite mis en oeuvre dans un procédé de polymérisation d'éthylène en deux réacteurs.

**A. Préparation du catalyseur**

On a fait réagir pendant 4 heures à 150 °C du diéthylate de magnésium, du tétrabutylate de titane et du tétrabutylate de zirconium en des quantités telles que le rapport molaire Ti/Mg soit égal à 0,6 et que le rapport molaire Zr/Ti soit égal à 1,2. Ensuite, on a chloré et précipité le produit de réaction ainsi obtenu en mettant celui-ci en contact avec une solution de dichlorure d'isobutylaluminium d'abord à 45 °C, puis à 60 °C. Le solide ainsi obtenu, recueilli de la suspension, comprenait (% en poids) :
Ti : 6; Zr : 12 ; Cl : 50; Al :

2; Mg : 5.

**B. Polymérisation de l'éthylène dans un seul réacteur**

On a répété les opérations de l'exemple 1 (B) dans les conditions opératoires suivantes :

- pression partielle initiale d'hydrogène : 1,2 MPa
- pression partielle d'éthylène : 0,6 MPa
- quantité de catalyseur mise en oeuvre : 12 mg
- durée de polymérisation : 42 min
- quantité de polyéthylène produit : 60 g.

Le polymère ainsi obtenu présentait un rapport $M_w/M_n$ de 19 et le catalyseur présentait un $K_d$ de 1.

**C. Polymérisation de l'éthylène en deux réacteurs**

On a répété les opérations de l'exemple 1 (C) dans les conditions opératoires suivantes :

**Polymérisation d'un premier polymère (i) :**

- température de polymérisation : 85 °C
- pression partielle initiale d'hydrogène : 1,2 MPa
- pression partielle d'éthylène : 0,6 MPa
- quantité de catalyseur mise en oeuvre : 12 mg
- quantité de polyéthylène produit : 54 g.

Le catalyseur présentait une activité $\alpha$ de 19,3.

**Polymérisation d'un deuxième polymère (ii) :**

- température de polymérisation : 70 °C
- pression partielle initiale d'hydrogène : 0,2 MPa
- pression partielle d'éthylène : 0,6 MPa
- rapport molaire butène/éthylène : 0,28
- quantité de polyéthylène produit dans la deuxième étape: 80 g
- quantité totale de polyéthylène produit : 134 g.

On a obtenu les résultats suivants :

**Polymère (i) :**

$MI_2 = $ 1,4

**Polymère (ii) :**

M15 =    0,03

Composition comprenant les polymères (i) et (ii) :

MI5 =        0,09
η =          23500
Mw/Mn =   18.

Une comparaison des résultats de l'exemple 2 avec ceux de l'exemple 1 font apparaître le progrès apporté par l'invention pour ce qui concerne l'écartement entre les indices de fluidité des polymères (i) et (ii) obtenus dans les deux réacteurs.

**Revendications**

1.  Tube comprenant une composition de polymères d'éthylène, comprenant d'une part un premier polymère de l'éthylène, présentant un indice de fluidité $MI_2$, mesuré à 190°C sous une charge de 2,16 kg selon la norme ASTM D1238, de 5 à 1 000 g/10 min et comprenant éventuellement une alpha-oléfine ou une dioléfine comprenant de 4 à 18 atomes de carbone en une quantité au maximum égale à 5 % en poids, et, d'autre part, un second polymère de l'éthylène présentant un indice de fluidité $MI_5$, mesuré à 190°C sous une charge de 5 kg selon la norme ASTM D1238, de 0,01 à 2 g/10 min, et comprenant de 0,5 à 20 % en poids d'une alpha-oléfine ou d'une dioléfine comprenant de 4 à 8 atomes de carbone, le rapport des indices de fluidité étant de 500 à 50 000, le rapport pondéral des polymères étant égal à (30 à 70):(70 à 30), et la composition présentant les caractéristiques suivantes:

    -   une distribution des poids moléculaires définie par un rapport $M_w/M_n$ de 5 à 70,
    -   un indice de fluidité $MI_5$ de 0,1 à 10 g/10 min et une viscosité dynamique η exprimée en dPa.s et mesurée à un gradient de vitesse de 100 s$^{-1}$ à 190 °C répondant à la relation

$$0,652 \geq \frac{[\log(177470/MI_5) - \log\eta]}{2 - \log(2,53 \times MI_5)}$$

2.  Tube selon la revendication 1, **caractérisé en ce que** la composition comprend de 0,5 à 10 % en poids d'une alpha-oléfine ou d'une dioléfine comprenant de 4 à 8 atomes de carbone.

3.  Tube selon la revendication 1 ou 2, **caractérisé en**

ce que le polymère d'indice de fluidité élevé est un homopolymère de l'éthylène et le polymère d'indice de fluidité faible est un copolymère de l'éthylène présentant une teneur en alpha-oléfine ou en dioléfine comprenant de 4 à 18 atomes de carbone de 0,5 à 6 % en poids.

**Office européen**

**des brevets**

**RAPPORT DE RECHERCHE EUROPEENNE**

Numéro de la demande

EP 05 07 5023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 547 551 A (BAILEY FAY W ET AL) 15 octobre 1985 (1985-10-15) * colonne 2, ligne 38 - ligne 40; revendications; tableaux 1,3 * ----- | 1-3 | C08L23/04 C08L23/06 |
| X | EP 0 503 791 A (MOBIL OIL CORP) 16 septembre 1992 (1992-09-16) * page 1, ligne 28 - ligne 29; revendications; exemple 5 * ----- | 1-3 | |

| DOMAINES TECHNIQUES RECHERCHES (Int.Cl.7) |
|---|
| C08L C08F |

Le présent rapport a été établi pour toutes les revendications

| Lieu de la recherche | Date d'achèvement de la recherche | Examinateur |
|---|---|---|
| La Haye | 19 avril 2005 | Schmidt, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..................................................................................
& : membre de la même famille, document correspondant

EPO FORM 1503 03.82 (P04C02)

**EP 1 544 244 A1**

**ANNEXE AU RAPPORT DE RECHERCHE EUROPEENNE
RELATIF A LA DEMANDE DE BREVET EUROPEEN NO.**

EP 05 07 5023

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-04-2005

| Document brevet cité au rapport de recherche | | Date de publication | Membre(s) de la famille de brevet(s) | | Date de publication |
|---|---|---|---|---|---|
| US 4547551 | A | 15-10-1985 | US | 4461873 A | 24-07-1984 |
| | | | AT | 26851 T | 15-05-1987 |
| | | | CA | 1216392 A1 | 06-01-1987 |
| | | | DE | 3371213 D1 | 04-06-1987 |
| | | | EP | 0100843 A1 | 22-02-1984 |
| | | | ES | 8600354 A1 | 01-01-1986 |
| | | | JP | 4029695 B | 19-05-1992 |
| | | | JP | 59047242 A | 16-03-1984 |
| | | | MX | 162443 A | 10-05-1991 |
| | | | NO | 832246 A ,B, | 23-12-1983 |
| EP 0503791 | A | 16-09-1992 | AU | 642076 B2 | 07-10-1993 |
| | | | AU | 1125692 A | 10-09-1992 |
| | | | CA | 2062098 A1 | 07-09-1992 |
| | | | DE | 69218995 D1 | 22-05-1997 |
| | | | DE | 69218995 T2 | 16-10-1997 |
| | | | DE | 69230919 D1 | 18-05-2000 |
| | | | DE | 69230919 T2 | 17-08-2000 |
| | | | EP | 0503791 A1 | 16-09-1992 |
| | | | EP | 0778289 A1 | 11-06-1997 |
| | | | ES | 2145357 T3 | 01-07-2000 |
| | | | JP | 3335659 B2 | 21-10-2002 |
| | | | JP | 5086122 A | 06-04-1993 |
| | | | US | 6194520 B1 | 27-02-2001 |
| | | | US | 6316546 B1 | 13-11-2001 |
| | | | US | 5688865 A | 18-11-1997 |
| | | | US | 2002042472 A1 | 11-04-2002 |

Pour tout renseignement concernant cette annexe : voir Journal Officiel de l'Office européen des brevets, No.12/82

10